# EUROPÄISCHE PATENTSCHRIFT

(11) **EP 0 785 230 B1**
(45) Veröffentlichungstag und Bekanntmachung des Hinweises auf die Patenterteilung: **21.03.2001**
(21) Anmeldenummer: 96119697.9
(22) Anmeldetag: 09.12.1996
(51) Int. Cl.: C08L 9/00, C08K 3/36, B60C 1/00

(54) **Vulkanisierbare Kautschukmischungen für die Herstellung von Fahrzeugreifen**
Vulcaniizable rubber compositions for vehicle tyres
Compositions vulcanisables de caoutchouc pour pneumatiques de véhicule

(30) Priorität: 20.12.1995 DE 19547630
(43) Veröffentlichungstag der Anmeldung: 23.07.1997
(73) Patentinhaber: BAYER AG, 51368 Leverkusen (DE)
(72) Erfinder: Braubach, Wilfried, 42659 Solingen (DE); Jeske, Winfried, 51399 Burscheid (DE); Marwede, Günter, Dr., 51069 Köln (DE)

(56) Entgegenhaltungen:
- EP-A- 0 641 823
- EP-A- 0 747 426
- FR-A- 2 364 630
- US-A- 3 978 165
- US-A- 4 522 970

## Beschreibung

Die Erfindung betrifft vulkanisierbare Kautschukmischungen, ein Verfahren zu ihrer Herstellung sowie die Verwendung der Kautschukmischungen für die Herstellung von Reifen, insbesondere Reifenlaufstreifen.

In jüngster Zeit hat es nicht an Versuchen gefehlt, Reifenmischungen für insbesondere Reifenlaufstreifen herzustellen, die einen verminderten Rollwiderstand zusammen mit einer guten Haftung bei Nässe, Eis und Schnee aufweisen. Darüber hinaus sollen die Reifen eine geringe Geräuschentwicklung beim Abrollen des Reifens aufweisen. Zur Herstellung solcher Reifenmischungen verwendet man üblicherweise eine Kautschukmischung, die in einem organischen Lösungsmittel polymerisierten Styrol-Butadien-Kautschuk (Lösungs-SBR) in Kombination mit wenigstens einem anderen Dien-Elastomeren und feinverteilter, gefällter Kieselsäure als verstärkendem Füllmaterial umfaßt. Die Kieselsäure wird entweder allein oder in Kombination mit Ruß eingesetzt. Die Vulkanisation wird durch Schwefel und Vulkanisationsreglern bewirkt. Eine solche Kautschukmischung ist beispielsweise beschrieben in der europäischen Patentanmeldung 0 501 227 und in dem US-Patent 5 227 425.

Die in dem genannten US-Patent und in der genannten europäischen Patentanmeldung beschriebenen Kautschukmischungen besitzen insbesondere den Nachteil der eingeschränkten Verarbeitungssicherheit und der für kurze Taktzeiten zu langen Vulkanisationszeit im Vergleich zu herkömmlichen rußgefüllten Mischungen. Dies geht zu Lasten der Wirtschaftlichkeit bei der Reifenherstellung.

Es war daher Aufgabe der vorliegenden Erfindung, vulkanisierbare Kautschukmischungen zur Verfügung zu stellen, die insbesondere für Laufstreifen von pneumatischen Reifen geeignet sind. Derartige, solche Laufstreifen aufweisende Reifen sollten gute Eigenschaften hinsichtlich der Naßrutschfestigkeit, des Rollwiderstands, der Abrollgeräusche, der Verschleißfestigkeit und der Lenkpräzision aufweisen. Darüber hinaus sollte die Reifenherstellung aufgrund des Einsatzes preisgünstiger Rohmaterialien sowie reduzierten Fertigungsaufwandes gegenüber oben beschriebener Lösung kostengünstiger werden.

Diese Aufgabe wurde erfindungsgemäß gelöst durch eine vulkanisierbare Kautschukmischung, insbesondere für Reifenlaufstreifen, bestehend aus
a) 20 bis 95 Gew.-Teilen eines Styrol-Butadien-Copolymeren mit einem Styrolgehalt von 15 bis 45 Gew.-%,
b) 10 bis 70 Gew.-Teilen eines Vinyl-Polybutadiens mit einem Vinylgehalt von 30 bis 80 Gew.-%,
c) 50 bis 100 Gew.-Teilen, bezogen auf 100 Gew.-Teile an eingesetzten Kautschuken, feinverteilter, gefällter Kieselsäure oder einer Mischung von feinverteilter, gefällter Kieselsäure und Ruß als verstärkenden Füllstoff sowie
d) gegebenenfalls weiteren üblichen Zusatzstoffen.

Die erfindungsgemäß eingesetzten Styrol-Butadien-Copolymeren a) besitzen bevorzugt einen Gehalt an Styrol von 18 bis 40 Gew.-%.

Die Styrol-Butadien-Copolymeren können nach bekannten Polymerisationsverfahren hergestellt werden, wie nach dem Emulsions-Polymerisationsverfahren oder dem Lösungs-Polymerisationsverfahren. Bevorzugt ist der Einsatz von Styrol-Butadien-Copolymeren, die nach dem Emulsionspolymerisationsverfahren hergestellt worden sind. Die Styrol-Butadien-Copolymeren besitzen Glasübergangstemperaturen im Temperaturintervall von -60°C bis -10°C, vorzugsweise von -50°C bis -25°C.

Zur Herstellung der Styrol-Butadien-Copolymeren sei insbesondere auf die einschlägige Fachliteratur verwiesen, z.B. Appl. Sci. Publ. 1983, Ullmann (4.) 13, 605-611, Blackley, Synthetic Rubbers: Their Chemistry and Technolgoy S. 95-126.

Bevorzugt bestehen die erfindungsgemäßen Kautschukmischungen aus 30 bis 90 Gew.-Teilen, insbesondere 40 bis 80 Gew.-Teilen eines Styrol-Butadien-Copolymeren.

Als Komponente b) werden bevorzugt solche Vinyl-Polybutadiene eingesetzt, die einen Vinylgehalt von 40 bis 80 Gew.-%, insbesondere von 60 bis 70 Gew.-% aufweisen. Solche Vinyl-Polybutadiene besitzen üblicherweise eine Glasübergangstemperatur im Temperaturintervall von -65°C bis -20°C, vorzugsweise von -40°C bis -25°C.

Die Herstellung der erfindungsgemäß einzusetzenden Vinyl-Polybutadiene erfolgt nach bekannten Verfahren, beispielsweise beschrieben in Houben-Weyl E20/2, 800.

Die Vinyl-Polybutadiene werden insbesondere in Mengen von 10 bis 70 Gew.-Teilen, ganz besonders bevorzugt in Mengen von 20 bis 60 Gew.-Teilen eingesetzt.

Gemäß der Erfindung kann grundsätzlich jede feinverteilte (gefällte) Kieselsäure eingesetzt werden, wie sie üblicherweise bei der Herstellung von Kautschukmischungen eingesetzt wird und die bei dem auf diesem Gebiet tätigen Fachmann als bekannt vorausgesetzt werden kann. In diesem Zusammenhang kann insbesondere die in der EP-A-0 501 227, EP-A-0 157 703 und DE-A-24 10 014 beschriebene Kieselsäure verwendet werden.

Allgemein können demnach gefällte und feinverteilte Kieselsäuren als Füllstoff in die erfindungsgemäßen Mischung eingesetzt werden, die eine BET-Fläche von 40 bis 350 m²/g, insbesondere von 100 bis 250 m²/g, eine CTAB-Fläche von 50 bis 350 m²/g, vorzugsweise von 100 bis 250 m²/g und einen mittleren Teilchendurchmesser von 10 bis 150 nm, vorzugsweise 10 bis 100 nm und eine DBP-Adsorption von 50 bis 350 ml/100 g, vorzugsweise 150 bis 250 ml/100 g besitzen. Die Kieselsäure kann entweder allein oder in Kombination mit Ruß eingesetzt werden.

Für die erfindungsgemäßen Kautschukmischungen ist es besonders vorteilhaft, wenn ihnen zusätzlich Silankupplungsmittel (Organosilane) zugesetzt werden. Als Silankupplungsmittel kommen insbesondere Organosilane der nachfolgenden Formeln (I) bis (III) in Frage:

[Rₙ¹-(RO)₃₋ₙSi-(Alk)ₘ-(Ar)ₚ]_{q}[B] (I),

Rₙ¹-(RO)₃₋ₙSi-(Alkyl) oder (II)

oder

Rₙ¹-(RO)₃₋ₙSi-(Alkenyl) (III),

in denen bedeuten
- B: -SNC, -SH, -Cl, -NH₂ (wenn q = 1) oder -Sₓ (wenn q = 2),
- R und R¹: eine Alkylgruppe mit 1 bis 4 Kohlenstoffatomen, den Phenylrest, wobei alle Reste R und R¹ jeweils die gleiche oder eine verschiedene Bedeutung haben können,
- n: 0, 1, 2 oder 3,
- Alk: einen zweiwertigen geraden oder verzweigten Kohlenwasserstoffrest mit 1 bis 6 Kohlenstoffatomen,
- m: 0 oder 1,
- Ar: einen Arylrest mit 6 bis 12 C-Atomen, bevorzugt 6 C-Atome,
- p: 0 oder 1 mit der Maßgabe, daß p und n nicht gleichzeitig 0 bedeuten,
- x: eine Zahl von 2 bis 8,
- Alkyl: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl: einen einwertigen, geraden oder verzweigten ungesättigten Kohlenwasserstoffrest mit 2 bis 20 Kohlenstoffatomen, bevorzugt 2 bis 8 Kohlenstoffatomen.

Im Zusammenhang mit den Organosilanen, deren Herstellung und deren Kombination mit Kieselsäuren wird ferner auf die nachfolgende Literatur verwiesen:

S. Wolff: "Reinforcing and Vulcanization Effects of Silane Si 69 in Silica-Filled Compounds", Kautschuk + Gummi, Kunststoffe 34, 280-284 (1981);

S. Wolff: "Optimization of Silane-Silica OTR Compounds. Part 1: Variations of Mixing Temperature and Time during the Modification of Silica with Bis(3-triethoxysilylpropyl)-tetrasulfide", Rubber Chem. Technol. 55, 967-989 (1982);

S. Wolff: "The Influence of Fillers on Rolling Resistance", Vortrag gehalten anläßlich einer Tagung der Rubber Division, American Chemical Society, New York/NJ, USA, 8.-11. April 1986.

Die erfindungsgemäß eingesetzten Silankupplungsmittel sind dem Fachmann aus dem weiteren Stand der Technik, insbesondere aus der EP-A-0 447 066, der DE-A-2 062 883 oder der DE-A-2 457 446 bekannt. Bevorzugt im Rahmen der vorliegenden Erfindung als Silankupplungsmittel sind insbesondere solche Silane, die wenigstens eine Alkoxygruppe im Molekül besitzen. Diese Silane sind ausgewählt aus Bis(3-triethoxysilylpropyl)-tetrasulfid, Bis(2-triethoxysilylethyl)-tetrasulfid, Bis(3-trimethoxysilylpropyl)tetrasulfid, Bis(2-trimethoxysilylethyl)tetra-sulfid, 2-Mercaptoethyltriethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chlorethyltriethoxysilan, 3-Trimethoxysilylpropyl-N,N-dimethylthiocarbamoyltetrasulfid, 3-Triethoxysilylpropyl-N,N-dimethylthiocarbamoyltetrasulfid, 2-Triethoxysilylethyl-N,N-dimethylthiocarbamoyltetrasulfid, 3-Trimethoxysilylpropylbenzothiazoltetrasulfid, 3-Triethoxysilylpropylbenzothiazoltetrasulfid, 3-Triethoxysilylpropylmethacrylatmonosulfid, 3-Trimethoxysilylpropylmetacrylatmonosulfid. Darunter sind Bis(3-triethoxysilylpropyl)-tetrasulfid und 3-Trimethoxysilylpropylbenzothiazoltetrasulfid bevorzugt. Des weiteren können Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyyvinylsilan, Triethoxyvinylsilan als Silankupplungsmittel eingesetzt werden.

Die Silankupplungsmittel werden bevorzugt in einer Menge von 2 bis 20 Gew.-Teilen, insbesondere 6 bis 10 Gew.-Teilen, bezogen auf 100 Gew.-Teile der Kieselsäure eingesetzt. Die Reaktion zwischen der Kieselsäure und dem Silankupplungsmittel kann während der Herstellung der Mischung (in situ) oder, alternativ hierzu, außerhalb durchgeführt werden. Letzteres führt zu einer vorbehandelten (modifizierten) Kieselsäure, die als solche der Mischung zugesetzt werden kann.

Das Verhältnis der eingesetzten Mengen von Kieselsäure zu Ruß, wenn in Kombination miteinander eingesetzt, beträgt 1:4 bis 7:1, vorzugsweise 1:2 bis 3:1.

Gemäß der Erfindung kann grundsätzlich jeder als Füllstoff geeignete Ruß eingesetzt werden. Bevorzugt ist jedoch ein Ruß, der eine Dibutylphthalat-Adsorption (DBPA-Zahl) von 30 bis 180 cm³/100 g (ASTM D 2414), eine Iod-Adsorptionszahl von 10 bis 250 g/kg (ASTM D 1510) sowie eine CTAB-Zahl von 5 bis 150 m²/g (ASTM D 3765) besitzt.

Die erfindungsgemäße Kautschukmischung enthält das verstärkende Füllmaterial bevorzugt in einer Menge von 65 bis 80 Gew.-Teilen, bezogen auf 100 Gew.-Teile der eingesetzten Kautschuke a), b) und gegebenenfalls des eingesetzten 1,4-Polybutadiens.

Die Kautschukmischung kann ferner die üblichen Zusätze in der üblichen Dosierung enthalten, wie insbesondere Weichmacher (z.B. Mineralöle), Alterungsschutzmittel, Schwefel, Vulkanisationsbeschleuniger (z.B. Sulfenamide, Diazole, Guanidine), anorganische Pigmente, weitere, jedoch andere Füllstoffe als die obengenannten Aktivatoren (z.B. Stearinsäure, Zinkoxid), Wachse.

Die Erfindung betrifft ferner ein Verfahren zur Herstellung der oben beschriebenen, vulkanisierbaren Kautschukmischungen durch Mischen des Styrol-Butadien-Copolymeren, des Vinylpolybutadiens und gegebenenfalls des 1,4-Polybutadiens mit Kieselsäure oder Kieselsäure in Kombination mit Ruß sowie gegebenenfalls des Silankupplungsmittels und der üblichen Zusatzstoffe mit Ausnahme des Vulkanisationssystems unter gleichzeitigem Erwärmen der Komponenten auf Temperaturen von 100 bis 160°C, bevorzugt 130 bis 150°C, und anschließendem Zumischen des Vulkanisationssystems bei Temperaturen unterhalb der Vulkanisationstemperatur.

Die erfindungsgemäße Kautschukmischung kann in üblicher Weise in Gegenwart eines geeigneten Vulkanisationssystems unter den üblichen, dem Fachmann bekannten Bedingungen, für die Herstellung von Reifen, vulkanisiert werden. Die erfindungsgemäß ausgehärtete Kautschukmischung kann ferner in Fördergurten, Dichtungen, Keilriemen, Schläuchen und Schuhsohlen Verwendung finden.

Die vorliegende Erfindung betrifft ferner die Verwendung der erfindungsgemäßen Kautschukmischungen zur Herstellung von Reifen, insbesondere Reifenlaufstreifen.

Die mit den erfindungsgemäßen Mischungen hergestellten Reifen zeichnen sich insbesondere dadurch aus, daß sie einen guten Rutsch- und Rollwiderstand besitzen, verbunden mit einem ausgezeichneten Abriebwiderstand. Dabei ist besonders herauszustellen, daß das Verhältnis von Rutsch-, Roll- und Abriebwiderstand besonders ausgewogen ist. Für den Fachmann war besonders überraschend, daß im Gegensatz zu den bekannten Kautschukmischungen mit den erfindungsgemäßen Mischungen eine beträchtliche Verringerung der Taktzeit bei der Herstellung von Reifen erzielt wird.

## Patentansprüche

1. Vulkanisierbare Kautschukmischungen bestehend aus
a) 20 bis 95 Gew.-Teilen eines Styrol-Butadien-Copolymeren mit einem Styrolgehalt von 15 bis 45Gew.-%,
b) 10 bis 70 Gew.-Teilen eines Vinyl-Polybutadiens mit einem Vinylgehalt von 30 bis 80 Gew.-%,
c) 50 bis 100 Gew.-Teilen, bezogen auf 100 Gew.-Teile an eingesetzten Kautschuken, feinverteilter, gefällter Kieselsäure oder einer Mischung von feinverteilter, gefällter Kieselsäure und Ruß als verstärkenden Füllstoff sowie
d) gegebenenfalls weiteren üblichen Zusatzstoffen.

2. Kautschukmischungen nach Anspruch 1, dadurch gekennzeichnet, daß die Mischungen 2 bis 20 Gew.-Teile an Silankupplungsmitteln, bezogen auf 100 Gew.-Teile der eingesetzten Kieselsäure, enthalten.

3. Verfahren zur Herstellung der Kautschukmischungen nach Ansprüchen 1 und 2 durch Mischen des Styrol-Butadien-Copolymeren a), des Vinyl-Polybutadiens b) und gegebenenfalls des 1,4-Polybutadiens mit Kieselsäure oder Kieselsäure in Kombination mit Ruß c) sowie gegebenenfalls des Silankupplungsmittels und der üblichen Zusatzstoffe mit Ausnahme des Vulkanisationssystems unter gleichzeitigem Erwärmen der Komponenten auf Temperaturen von 100 bis 160°C und anschließendem Zumischen des Vulkanisationssystems bei Temperaturen unterhalb der Vulkanisationstemperatur.

4. Verwendung der Kautschukmischungen nach Ansprüchen 1 bis 3 zur Herstellung von Reifen, insbesondere Reifenlaufstreifen.

## Claims

1. Vulcanisable rubber compositions consisting of
a) 20 to 95 parts by weight of a styrene-butadiene copolymer having a styrene content of 15 to 45 wt.%,
b) 10 to 70 parts by weight of a vinyl polybutadiene having a vinyl content of 30 to 80 wt.%.
c) 50 to 100 parts by weight, relative to 100 parts by weight of the rubbers used, of finely divided, precipitated silica or a mixture of finely divided, precipitated silica and carbon black as the reinforcing filler and
d) optionally further conventional additives.

2. Rubber compositions according to claim 1, characterised in that the compositions contain 2 to 20 parts by weight of silane coupling agents, relative to 100 parts by weight of the silica used.

3. Process for the production of the rubber compositions according to claims 1 and 2 by mixing the styrene-butadiene copolymer a), the vinyl polybutadiene b) and optionally the 1,4-polybutadiene with silica or silica in combination with carbon black c), optionally together with the silane coupling agent and conventional additives with the exception of the vulcanising system while simultaneously heating the components to temperatures of 100 to 160°C and subsequently incorporating the vulcanising system at temperatures of below the vulcanisation temperature.

4. Use of the rubber compositions according to claims 1 to 3 for the production of tyres, in particular tyre treads.

## Revendications

1. Caoutchoucs mélangés vulcanisables consistant en
a) 20 à 95 parties en poids d'un copolymère styrène-butadiène à une teneur en styrène de 15 à 45 % en poids,
b) 10 à 70 parties en poids d'un vinyl-polybutadiène à une teneur en vinyle de 30 à 80 % en poids,
c) 50 à 100 parties en poids, pour 100 parties en poids des caoutchoucs mis en oeuvre, d'une silice précipitée à l'état de fine division ou d'un mélange de silice précipitée à l'état de fine division et de noir de carbone, en tant que matière de charge renforçante, et
d) le cas échéant d'autres additifs usuels.

2. Caoutchoucs mélangés selon revendication 1, caractérisés en ce qu'ils contiennent de 2 à 20 parties en poids d'agents de couplage du type silane, pour 100 parties en poids de la silice mise en oeuvre.

3. Procédé de préparation des caoutchoucs mélangés selon revendicatrions 1 et 2 par mélange du copolymère styrène-butadiène a), du vinyl-polybutadiène b) et le cas échéant du 1,4-polubutadiène avec de la silice ou une combinaison de silice et de noir de carbone c), le cas échéant l'agent de couplage du type silane et les additifs usuels à l'exception du système vulcanisant, avec chauffage simultané des composants à des températures de 100 à 160°C, et addition subséquente du système vulcanisant à des températures inférieures à la température de vulcanisation.

4. Utilisation des caoutchoucs mélangés selon revendications 1 à 3 pour la fabrication de pneumatiques, en particulier de bandes de roulement de pneumatiques.
